# EUROPÄISCHE PATENTSCHRIFT

(11) **EP 3 303 068 B1**
(45) Veröffentlichungstag und Bekanntmachung des Hinweises auf die Patenterteilung: **08.05.2019**
(21) Anmeldenummer: 16729803.3
(22) Anmeldetag: 27.05.2016
(51) Int. Cl.: B60R 21/231, B60R 21/235

(54) **GASSACK FÜR EIN AIRBAGMODUL**
AIRBAG FOR A MOTOR VEHICLE AIRBAG MODULE
COUSSIN GONFLABLE POUR UN MODULE À COUSSIN GONFLABLE DE VÉHICULE AUTOMOBILE

(30) Priorität: 28.05.2015 DE 102015108423
(43) Veröffentlichungstag der Anmeldung: 11.04.2018
(73) Patentinhaber: Joyson Safety Systems Germany GmbH, 63743 Aschaffenburg (DE)
(72) Erfinder: WEYRICH, Christian, 89275 Oberelchingen (DE); SENDELBACH, Hans-Peter, 89250 Senden (DE); RATHGEB, Volker, 89584 Ehingen-Rißtissen (DE); DIERKS, Uwe, 89143 Blaubeuren (DE); RIST, Holger, 89233 Neu-Ulm (DE)
(74) Vertreter: Maikowski & Ninnemann Patentanwälte Partnerschaft mbB
(86) Internationale Anmeldenummer: PCT/EP2016/062030
(87) Internationale Veröffentlichungsnummer: WO 2016/189145

(56) Entgegenhaltungen:
- EP-A1- 2 540 580
- DE-A1-102010 062 422

## Beschreibung

Die Erfindung betrifft einen Gassack nach dem Oberbegriff des Anspruchs 1.

Ein Gassack als Teil eines Airbagmoduls für ein Fahrzeug dient im Auslösefall dem Abbremsen eines Fahrzeuginsassen beziehungsweise eines Körperteils des Fahrzeuginsassen. Hierzu wird der Gassack im Auslösefall durch einen Gasgenerator mit Gas befüllt, um einen kissenartigen Schutz für den Fahrzeuginsassen bereitzustellen. So sind beispielsweise Airbagmodule bekannt, die bei einem Seitenaufprall des Fahrzeuges dem Schutz des Kopf-und Thoraxbereiches des Fahrzeuginsassen dienen. Im bestimmungsgemäß angeordneten Zustand eines solchen Airbagmoduls erstreckt sich der mit Gas befüllte Gassack im Auslösefall seitlich neben dem Fahrzeuginsassen. Für einen sogenannten Far-Side Aufprall sind Airbagmodule bekannt, die in der Rückenlehne des Fahrzeugsitzes an der der Fahrzeugmitte zugewandten Seite des Fahrzeugsitzes vorgesehen sind. Im Auslösefall tritt der mit Gas befüllte Gassack aus der Rückenlehne an der der Fahrzeugmitte zugewandten Seite aus und schiebt sich zwischen den Fahrzeuginsassen und den Ort des Aufpralls und insbesondere zwischen den Fahrzeuginsassen und einem möglichen benachbarten Fahrzeuginsassen. Zum Schutz gegen einen sogenannten Near-Side Aufprall ist ein Airbagmodul mit einem Gassack bekannt, der sich im Auslösefall vorhangartig aus der Decke des Fahrzeugs karosserieseitig seitlich neben dem Fahrzeuginsassen erstreckt.

Um einen möglichst effizienten Schutz zu ermöglichen, ist es vorteilhaft, wenn der mit Gas befüllte Gassack relativ nah am Kopf des Fahrzeuginsassen positioniert ist. Dazu kann eine Gassackkammer vorgesehen sein, die im Vergleich zu bekannten Gassackkammern ein größeres Volumen hat, so dass sie sich im Auslösefall sehr nahe am Kopf des Fahrzeuginsassen erstreckt und frühzeitig den Kopf- und Thoraxbereich abstützen kann. Jedoch würde ein solcher Gassack auch im zusammengefalteten Zustand mehr Raum beanspruchen als ein bekannter Gassack. Zudem ist ein im Vergleich größerer Gasgenerator erforderlich, um das große Volumen mit Gas befüllen zu können. In der Folge könnte der zur Verfügung stehende Bauraum für das Airbagmodul zu klein sein.

Eine weitere Möglichkeit, den befüllten Gassack möglichst nah am Kopf des Fahrzeuginsassen zu positionieren, besteht darin, einen Gassack bereitzustellen, der im aufgeblasenen Zustand zu dem Fahrzeuginsassen hin gekrümmt ist. Beispielsweise kann eine Krümmung des Gassacks durch Verwendung von zusätzlichen, an den Gassacklagen des Gassacks befestigten Fangbändern, wie beispielsweise aus der DE 44 05 927 A1 bekannt, erzielt werden. Alternativ können Raffnähte in den Gassacklagen die Form des Gassacks im aufgeblasenen Zustand beeinflussen. Dieser Effekt wird beispielsweise für das aus der EP 0 988 185 B1 bekannte Seitenairbagmodul und für den Gassack aus der EP 0 773 144 B1 genutzt. Ferner kann durch Verwendung von speziellen Zuschnitten der den Gassack bildenden Gassacklagen eine Krümmung des aufgeblasenen Gassacks erfolgen. Diese Maßnahmen stellen jedoch einen Mehraufwand bei der Konzipierung und Herstellung des Gassacks dar.

DE 10 2010 062 422 offenbart einen Gassack der die Merkmale des Oberbegriffs des Anspruchs 1 beinhaltet.

Der vorliegenden Erfindung liegt die Aufgabe zugrunde, einen Gassack bereitzustellen, der im aufgeblasenen Zustand eine gewünschte Krümmung aufweist, die mit einfachen Mitteln realisiert werden kann.

Diese Aufgabe wird erfindungsgemäß durch einen Gassack mit den Merkmalen des Anspruchs 1 gelöst. Ausgestaltungen der Erfindung sind in den Unteransprüchen angegeben.

Danach umfasst der zum Schutz eines Fahrzeuginsassen aufblasbare Gassack eine erste Gassacklage und eine zweite Gassacklage, wobei ein erster Gewebezuschnitt die erste Gassacklage bildet und ein zweiter Gewebezuschnitt die zweite Gassacklage bildet und wobei der erste Gewebezuschnitt und der zweite Gewebezuschnitt jeweils aus Fäden gewebt sind. Der Gassack weist mindestens einen länglichen Abschnitt auf, der sich entlang einer Längsrichtung erstreckt und der zumindest von einem Teil der ersten Gassacklage und zumindest einem Teil der zweiten Gassacklage gebildet ist. Der Gassack zeichnet sich dadurch aus, dass im Ruhezustand des Gassacks die Fäden der ersten Gassacklage und die Fäden der zweiten Gassacklage derart zueinander ausgerichtet sind, dass die Fäden der ersten Gassacklage mit der Längsrichtung des länglichen Abschnitts einen anderen Winkel einschließen als die Fäden der zweiten Gassacklage, wobei die Winkel derart gewählt sind, dass der Gassack im aufgeblasenen Zustand eine Krümmung in Richtung einer der beiden Gassacklagen aufweist.

Im Auslösefall wird das Gewebe der ersten und der zweiten Gassacklage in dem länglichen Abschnitt aufgrund der länglichen Form des Abschnitts stärker quer zu der Längsrichtung des länglichen Abschnitts als entlang der Längsrichtung des länglichen Abschnitts beansprucht. Da die Fäden der beiden Gassacklagen mit der Längsrichtung des länglichen Abschnitts jeweils einen anderen Winkel einschließen, können sich die relative Anordnung der Fäden der ersten Gassacklage und die relative Anordnung der Fäden der zweiten Gassacklage im Auslösefall unterschiedlich stark ändern. So kann sich im Auslösefall die eine Gassacklage (zum Beispiel die erste Gassacklage) quer zur Längsrichtung des länglichen Abschnitts stärker dehnen und (aufgrund der Dehnung quer zur Längsrichtung) entlang der Längsrichtung des länglichen Abschnitts stärker verkürzen (stauchen) als die andere Gassacklage (zum Beispiel die zweite Gassacklage). Dieses unterschiedliche Dehnungs- und Stauchungsverhalten der beiden Gassacklagen führt zu einer Krümmung des Gassacks im aufgeblasenen Zustand in Richtung einer der beiden Gassacklagen.

Vorzugsweise ergibt sich die Krümmung des aufgeblasenen Gassacks bei einem Gassackinnendruck von über 100 kPa.

Durch den Gassack gemäß Anspruch 1 kann die gewünschte Positionierung des mit Gas befüllten Gassacks auch ohne Erhöhung des Gassackvolumens und die damit einhergehenden Nachteile erzielt werden.

Gemäß einer Ausführungsform kann der Gassack eine erste Gassacklage und eine zweite Gassacklage aufweisen, die jeweils entlang ihrer Umfangskante über eine erste Verbindung miteinander verbunden sind. Die erste Gassacklage kann dabei von einem ersten Gewebezuschnitt und die zweite Gassacklage von einem zweiten Gewebezuschnitt gebildet werden. Der erste und der zweite Gewebezuschnitt können jeweils aus einem Gewebe ausgeschnitten sein, das aus Fäden gewebt ist. Im Ruhezustand des Gassacks können die Fäden der ersten Gassacklage und die Fäden der zweiten Gassacklage derart zueinander ausgerichtet sein, dass die Fäden der ersten Gassacklage und die erste Verbindung einen anderen Winkel einschließen als die Fäden der zweiten Gassacklage und die erste Verbindung. Dabei können die Winkel derart gewählt sein, dass der Gassack im aufgeblasenen Zustand eine Krümmung in Richtung einer der beiden Gassacklagen aufweist.

Im Auslösefall wird das Gewebe im Wesentlichen senkrecht zu der ersten Verbindung beansprucht. Da die Fäden der beiden Gassacklagen mit der Richtung der Zugkraft jedoch jeweils einen anderen Winkel einschließen, werden die Fäden der ersten Gassacklage und die Fäden der zweiten Gassacklage unterschiedlich beansprucht, was zu einem unterschiedlichen Dehnungsverhalten der ersten und der zweiten Gassacklage führt. Je größer der Winkel zwischen den Fäden einer Gassacklage und der Richtung der Zugkraft ist, also je weniger die mechanische Beanspruchung entlang der Erstreckungsrichtung der dieser Fäden erfolgt, umso stärker kann sich das Gewebe der Materiallage dehnen. Durch das unterschiedliche Dehnungsverhalten der ersten und der zweiten Gassacklage kann eine Krümmung des aufgeblasenen Gassacks herbeigeführt werden. Vorzugsweise ergibt sich die Krümmung des aufgeblasenen Gassacks bei einem Gassackinnendruck von über 100 kPa.

Es kann vorgesehen sein, dass im montierten und aufgeblasenen Zustand des Gassacks diejenige Gassacklage (zum Beispiel die erste Gassacklage) dem Fahrzeuginsassen zugewandt ist, die sich im Auslösefall quer zur Längsrichtung des länglichen Abschnitts stärker dehnt und entlang der Längsachse des länglichen Abschnitts stärker verkürzt (gestaucht) wird als die andere Gassacklage (zum Beispiel die zweite Gassacklage). Somit kann eine Krümmung des aufgeblasenen Gassacks erzielt werden, die hin zu dem Fahrzeuginsassen gerichtet ist.

Um eine möglichst starke Krümmung zu erzielen, können sich insbesondere die Fäden der zweiten Gassacklage im Wesentlichen senkrecht beziehungsweise parallel zu der Längsrichtung des länglichen Abschnitts beziehungsweise zu der ersten Verbindung erstrecken. Dadurch können sich der Winkel, den die Fäden der ersten Gassacklage und die Längsrichtung des länglichen Abschnitts beziehungsweise die erste Verbindung einschließen, und der Winkel, den die Fäden der zweiten Gassacklage und die Längsrichtung des länglichen Abschnitts beziehungsweise die erste Verbindung einschließen, maximal (nämlich 45°) voneinander unterscheiden. Erstrecken sich die Fäden der zweiten Gassacklage nicht im Wesentlichen senkrecht beziehungsweise parallel zu der Längsrichtung beziehungsweise ersten Verbindung, sondern schließen mit der Längsrichtung beziehungsweise ersten Verbindung einen Winkel ein, so können sich der Winkel, den die Fäden der ersten Gassacklage und die Längsrichtung des länglichen Abschnitts beziehungsweise die erste Verbindung einschließen, und der Winkel, den die Fäden der zweiten Gassacklage und die Längsrichtung des länglichen Abschnitts beziehungsweise die erste Verbindung einschließen, nur noch um weniger als 45° unterscheiden.

Der Gassack kann genau einen oder mehr als einen länglichen Abschnitt aufweisen, wobei sowohl die erste Gassacklage als auch die zweite Gassacklage zu der Ausbildung des länglichen Abschnitts beitragen. Der mindestens eine längliche Abschnitt kann im aufgeblasenen Zustand des Gassacks im Wesentlichen röhrenförmig verlaufen. Dabei erstreckt sich der längliche Abschnitt zumindest näherungsweise entlang seiner Längsrichtung. Denkbar ist dabei jedoch, dass der längliche Abschnitt nicht exakt geradlinig (linear) verläuft, sondern zumindest abschnittsweise von einem derartigen linearen Verlauf aufweicht (z.B. leicht gekrümmt verläuft). Die längliche Form kann dazu führen, dass sich der Gassack mit den wie eingangs beschrieben unterschiedlich ausgerichteten Geweben der Gassacklagen im aufgeblasenen Zustand in Richtung der Gassacklage, bei der der Winkel zwischen den Fäden und der Längsrichtung des länglichen Abschnitts beziehungsweise der ersten Verbindung stärker von 90° abweicht, krümmt.

Besonders bevorzugt erstrecken sich die Fäden der zweiten Gassacklage im Wesentlichen parallel beziehungsweise senkrecht zu der Längsrichtung des länglichen Abschnitts. Die erzielte Krümmung umfasst dabei eine Komponente, die eine Abweichung von der Längsrichtung des länglichen Abschnitts in Richtung der ersten Gassacklage ist.

Gemäß einer Ausführungsform kann der Gassack im aufgeblasenen Zustand mehrere längliche Abschnitte aufweisen, die im Wesentlichen parallel zueinander angeordnet sind und / oder auf einer gemeinsamen Achse liegen. Dabei kann sich zwischen zumindest zwei der länglichen Abschnitte ein Trennbereich befinden, der im aufgeblasenen Zustand des Gassacks eine geringere Dicke aufweist als die länglichen Abschnitte. Unter der Dicke eines länglichen Abschnitts ist der Abstand zwischen der ersten Gassacklage und der zweiten Gassacklage zu verstehen. Die Dicke des Trennbereichs ist die entsprechende Ausdehnung des Trennbereichs. Beispielsweise kann der Trennbereich als nicht aufblasbarer Bereich gestaltet sein.

Gemäß einer weiteren Ausführungsform kann der Gassack im aufgeblasenen Zustand mindestens einen ersten und mindestens einen zweiten länglichen Abschnitt aufweisen, wobei sich der zweite längliche Abschnitt entlang seiner Längsrichtung und im Wesentlichen senkrecht zu der Längsrichtung des mindestens einen ersten länglichen Abschnitts erstreckt. Der mindestens eine zweite längliche Abschnitt kann dabei zumindest von einem Teil der ersten Gassacklage und zumindest einem Teil der zweiten Gassacklage gebildet sein. Durch Kombination von unterschiedlich ausgerichteten länglichen Abschnitten kann eine komplexe Krümmung des aufgeblasenen Gassacks erzielt werden. So können der erste und der zweite längliche Abschnitt so beschaffen sein, dass der aufgeblasene Gassack aufgrund des ersten länglichen Abschnitts eine Krümmung um eine erste Achse und aufgrund des zweiten länglichen Abschnitts eine Krümmung um eine zweite Achse aufweist. Die erste und die zweite Achse sind dabei (aufgrund der senkrechten Ausrichtung von erstem und zweitem länglichen Abschnitt) im Wesentlichen senkrecht zueinander ausgerichtet. Ferner ist die erste Achse im Wesentlichen senkrecht zu der Längsrichtung des ersten länglichen Abschnitts und im Wesentlichen parallel zu der Längsrichtung des zweiten länglichen Abschnitts ausgerichtet, während die zweite Achse im Wesentlichen senkrecht zu der Längsrichtung des zweiten länglichen Abschnitts und im Wesentlichen parallel zu der Längsrichtung des ersten länglichen Abschnitts ausgerichtet ist.

Da die Formgebung des Gassacks im aufgeblasenen Zustand durch die unterschiedliche Ausrichtung der Fäden in der ersten und der zweiten Gassacklage gesteuert werden kann, kann auf komplexe Gewebezuschnitte, die auf eine Neigung des aufgeblasenen Gassacks abzielen, verzichtet werden. Vielmehr können der erste Gewebezuschnitt und der zweite Gewebezuschnitt jeweils zweidimensional, also jeweils flächig in einer Ebene anordenbar sein. Alternativ können jedoch auch Gewebezuschnitte, die für eine dreidimensionale Anordnung vorgesehen sind, verwendet werden, um den Effekt der unterschiedlich ausgerichteten Fäden mit dem der Form der Gewebezuschnitte zu kombinieren.

Sofern ein Gewebe mit einer Beschichtung zum Einsatz kommt, können der erste und der zweite Gewebezuschnitt spiegelbildlich zueinander ausgebildet sein. Damit kann erreicht werden, dass die Beschichtung beim Verbinden der beiden Gewebezuschnitte bei beiden Gewebezuschnitten dem Gassackinnenraum zugewandt werden kann. Die spiegelbildliche Ausbildung bezieht sich dabei nicht auf die Ausrichtung der Fäden des ersten und des zweiten Gewebezuschnitts zu der jeweiligen Umfangskante.

Ferner kann vorgesehen sein, dass der erste Gewebezuschnitt und der zweite Gewebezuschnitt dieselbe Form und dieselbe Größe aufweisen. Auch können der erste Gewebezuschnitt und der zweite Gewebezuschnitt aus dem gleichen Gewebe gefertigt sein.

Gemäß einer Ausführungsform können der erste Gewebezuschnitt und der zweite Gewebezuschnitt jeweils aus senkrecht zueinander verlaufenden Kettfäden und Schussfäden gewebt sein, wobei die Art des Gewebes des ersten Gewebezuschnitts und die Art des Gewebes des zweiten Gewebezuschnitts derart unterschiedlich sind, dass sich beim Aufblasen des Gassacks die relative Ausrichtung der Kettfäden und Schussfäden des einen (zum Beispiel des ersten) Gewebezuschnitts stärker ändert als die relative Ausrichtung der Kettfäden und Schussfäden des anderen (zum Beispiel des zweiten) Gewebezuschnitts. Mit anderen Worten weisen die beiden Gassacklagen unterschiedliche Scherbarkeiten (Beweglichkeiten der Kett- und Schussfäden relativ zueinander) auf, wodurch sich der durch die unterschiedliche Ausrichtung der Gassacklagengewebe erzielte Effekt, dass sich die eine Gassacklage beim Aufblasen des Gassacks quer zur Längsrichtung des länglichen Abschnitts stärker dehnt (und entsprechend in Längsrichtung des länglichen Abschnitts stärker gestaucht wird) verstärkt. Denkbar ist auch, dass ein Gassack bereitgestellt wird, dessen Gassacklagen derartige unterschiedliche Scherbarkeiten aufweisen, die Gassacklagen jedoch zumindest näherungsweise gleich ausgerichtet sind.

Um eine unterschiedlich starke Änderung der relativen Ausrichtung der Kettfäden und Schussfäden in den beiden Gewebezuschnitten (d.h. die unterschiedlichen Scherbarkeiten der Gassacklagengewebe) zu erreichen, können beispielsweise die Fäden des ersten und des zweiten Gewebezuschnitts eine unterschiedliche Oberflächenbeschaffenheit, insbesondere hinsichtlich ihrer Glätte (Gleitfähigkeit) aufweisen. Auch kann eine unterschiedlich hohe Webdichte der Fäden für den ersten Gewebezuschnitt und den zweiten Gewebezuschnitt vorgesehen sein.

Ferner kann vorgesehen sein, dass zumindest das Gewebe des ersten Gewebezuschnitts eine Beschichtung aufweist. Die Beschichtung kann dabei derart beschaffen sein, dass sie eine Änderung der relativen Ausrichtung der Kettfäden und Schussfäden des zweiten Gewebezuschnitts beim Aufblasen des Gassacks behindert. Alternativ können das Gewebe des ersten Gewebezuschnitts und das Gewebe des zweiten Gewebezuschnitts jeweils eine Beschichtung aufweisen, wobei die Beschichtung des ersten Gewebezuschnitts eine Änderung der relativen Ausrichtung der Kettfäden und Schussfäden des ersten Gewebezuschnitts weniger behindert als die Beschichtung des zweiten Gewebezuschnitts eine Änderung der relativen Ausrichtung der Kettfäden und Schussfäden des zweiten Gewebezuschnitts. Dabei können sich die Beschichtungen hinsichtlich der Schichtdicke, der Zusammensetzung und/oder Elastizität unterscheiden. Die Beschichtung kann flächig auf dem Gewebe ausgebildet sein und/oder die Fäden einzeln umschließen.

Üblicherweise ist ein Gewebe aus senkrecht zueinander verlaufenden Kettfäden und Schussfäden gewebt. Der erste Gewebezuschnitt und der zweite Gewebezuschnitt umfassen demnach jeweils Kettfäden und Schussfäden. Insbesondere sind die Kettfäden und die Schussfäden derart miteinander verbunden (verwoben), dass bei einer Dehnung des Gewebes (zum Beispiel beim Aufblasen des Gassacks) in eine Richtung, die einen Winkel größer als 0° und kleiner als 90° mit den Kettfäden oder Schussfäden einschließt, eine Stauchung des Gewebes senkrecht zu dieser Richtung auftritt. Dabei verschieben sich die ursprünglich senkrecht zueinander verlaufenden Kettfäden und Schussfäden derart zueinander, dass sie ein rautenförmiges Muster bilden. Die Kettfäden und Schussfäden können in dem Gassack so ausgebildet sein, dass sie bei Beanspruchung der Gewebezuschnitte in Richtung der Kettfäden beziehungsweise der Schussfäden dasselbe Dehnungsverhalten aufweisen.

Gemäß einer weiteren Ausführungsform kann mindestens ein Abspannband vorgesehen sein, das eine Ausbildung der Krümmung des Gassacks im aufgeblasenen Zustand verstärkt und/oder die gekrümmte Form des aufgeblasenen Gassacks stabilisiert.

Gemäß einer Ausführungsform können die erste Gassacklage und die zweite Gassacklage jeweils im Wesentlichen rechteckig ausgebildet sein, wobei die erste Gassacklage und die zweite Gassacklage jeweils entlang ihrer Umfangskante mittels einer ersten Verbindung miteinander verbunden sind und wobei die erste Gassacklage und die zweite Gassacklage ferner über eine zweite und dritte, jeweils eine geschlossene Kurve bildende, Verbindung miteinander verbunden sind. Die zweite Verbindung und die dritte Verbindung können dabei derart bezüglich der ersten Verbindung angeordnet sein, dass zwischen der ersten Gassacklage und der zweiten Gassacklage ein mit Gas befüllbarer, im Wesentlichen 8-förmiger Gassackinnenraum ausgebildet wird. Ferner können die zweite und die dritte Verbindung jeweils einen nicht aufblasbaren Bereich des Gassacks begrenzen, der jeweils zwei längliche Abschnitte des Gassacks voneinander trennt.

Im Ruhezustand des Gassacks können die erste Gassacklage und die zweite Gassacklage aneinander anliegen. Im aufgeblasenen Zustand des Gassacks kann sich das Gas zwischen der ersten Gassacklage und der zweiten Gassacklage beziehungsweise zwischen einem Bereich der ersten Gassacklage und einem Bereich der zweiten Gassacklage befinden.

Gemäß einer Ausführungsform kann vorgesehen sein, dass die Verbindungen (beispielsweise) Verbindungsnähte) beispielsweise mit Silikon abgedichtet sind. Dabei weist der Gassack vorzugsweise keine Abströmöffnung auf. Dadurch kann erreicht werden, dass sich ein Gassackinnendruck von über 100 kPa einstellen kann. Die Krümmung des aufgeblasenen (insbesondere des abgedichteten und mit einem hohen Druck aufgeblasenen) Gassacks dient z.B. der Abstützung und Stabilisierung des Kopfes des Fahrzeuginsassen (insbesondere bei Verwendung des Gassacks als Far-Side-Gassack).

Gemäß einer Ausführungsform kann der Gassack jedoch auch derart ausgebildet sein, dass er zum Schutz des Kopf- und Thoraxbereiches des Fahrzeuginsassen im aufgeblasenen Zustand einen seitlichen Aufprallschutz bilden kann.

Wie erwähnt kann der Gassack als Teil eines Airbagmoduls konzipiert sein, das zum Schutz gegen einen Far-Side-Aufprall dient. Dabei kann vorgesehen sein, dass das Airbagmodul derart anordenbar ist, dass sich der aufgeblasene Gassack seitlich neben dem Fahrzeuginsassen entfalten kann. Beispielsweise kann das Airbagmodul an der Rückenlehne eines Fahrzeugsitzes anordenbar sein. Gemäß einer Ausführungsform kann die erste Gassacklage dem Fahrzeuginsassen zugewandt und die zweite Gassacklage von dem Fahrzeuginsassen abgewandt sein. Vorzugsweise ist dabei der mindestens eine längliche Abschnitt im Wesentlichen vertikal beziehungsweise parallel zu einer B-Säule eines Fahrzeugs ausgerichtet.

Die Krümmung des Gassacks im aufgeblasenen Zustand ist daher hin zu dem Insassen gerichtet und kann bei einem Far-Side-Aufprall den Insassen (insbesondere dessen Kopf) frühzeitig abstützen und ihn somit möglichst im Sitz halten. Der Gassack hat hier eine Stützfunktion.

Ein Airbagmodul, das einen Gassack der eingangs genannten Art umfasst, ist in Anspruch 13 angegeben.

Die Erfindung wird nachfolgend unter Bezugnahme auf die Figuren anhand mehrerer Ausführungsbeispiele näher erläutert. Es zeigen:
- Fig. 1: eine schematische Darstellung eines Gassacks im aufgeblasenen Zustand, der zwei Gassacklagen umfasst;
- Fig. 2: eine schematische Draufsicht auf zwei Gewebezuschnitte zur Ausbildung der zwei Gassacklagen für den Gassack aus Figur 1;
- Fig. 3: eine schematische Draufsicht auf ein Gewebe für eine Gassacklage;
- Fig. 4: eine schematische Darstellung eines Gassacks gemäß einer Ausführungsform der Erfindung im aufgeblasenen Zustand, der zwei Gassacklagen umfasst;
- Fig. 5: eine schematische Draufsicht auf zwei Gewebezuschnitte zur Ausbildung der zwei Gassacklagen für den Gassack aus Figur 4;
- Fig. 6: eine schematische Darstellung der Kräfte, die im aufgeblasenen Zustand auf das Gewebe in einem röhrenförmigen Abschnitt des Gassacks aus Figur 4 wirken;
- Fig. 7: eine schematische Draufsicht auf die zwei Gewebezuschnitte aus Figur 5 im Bereich eines röhrenförmigen Abschnitts im nicht aufgeblasenen Zustand (oben) und im aufgeblasenen Zustand (unten); und
- Fig. 8: eine schematische Draufsicht auf einen Gewebezuschnitt eines Gassacks gemäß einem weiteren Ausführungsbeispiel der Erfindung.

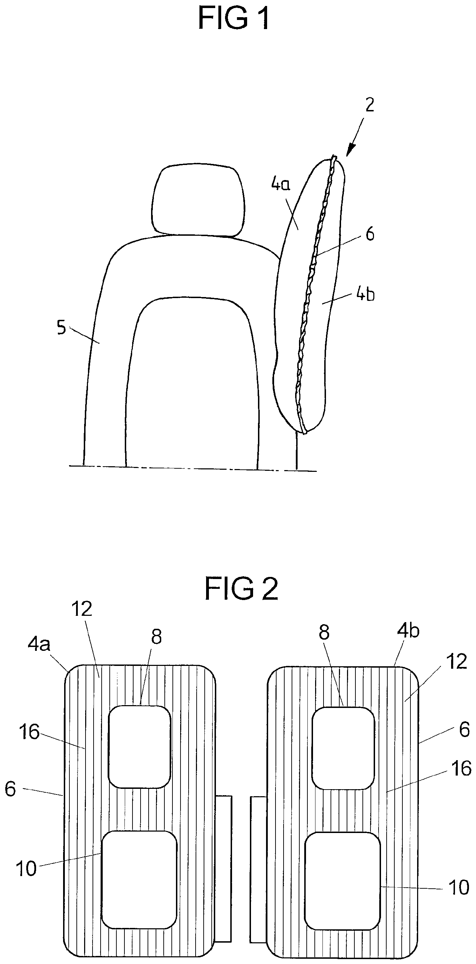

In Figur 1 ist ein Gassack 2 im aufgeblasenen Zustand dargestellt, der eine erste Gassacklage 4a und eine zweite Gassacklage 4b umfasst. Der Gassack 2 kann beispielsweise in einem Airbagmodul zum Schutz gegen einen Far-Side Aufprall eingesetzt werden. In Figur 1 ragt der aufgeblasene Gassack 2 in Fahrtrichtung aus der Rückenlehne 5 eines Fahrzeugsitzes.

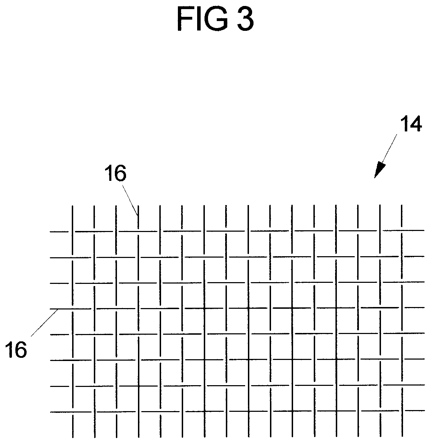

Die erste Gassacklage 4a und die zweite Gassacklage 4b werden von einem ersten Gewebezuschnitt beziehungsweise einem zweiten Gewebezuschnitt gebildet (Figur 2). Ein Gewebezuschnitt wird aus einem Gewebe 14 geschnitten, das beispielhaft in Figur 3 dargestellt ist. Ein für Gassäcke geeignetes Gewebe umfasst beispielsweise Polyamid, insbesondere Nylon 6,6 (auch bekannt als PA 6.6), oder Polyester. Das Gewebe 14 umfasst Fäden 16, die miteinander verwebt sind. Dabei wird zwischen sogenannten Kettfäden und Schussfäden unterschieden, die derart miteinander verwoben sind, dass sich die Kettfäden im Ruhezustand des Gewebes im Wesentlichen im rechten Winkel zu den Schussfäden erstrecken.

Figur 2 stellt die erste Gassacklage 4a und die zweite Gassacklage 4b des Gassacks 2 aus Figur 1 flächig ausgebreitet und getrennt voneinander dar. Bei den Gewebezuschnitten aus Figur 2 ist der Übersicht halber nur eine Art von Fäden 16 abgebildet. Die abgebildeten Fäden 16 können entweder die Kettfäden oder die Schussfäden sein. Die Gewebezuschnitte in Figur 2 sind im Wesentlichen rechteckig ausgebildet und weisen jeweils die gleiche Form und Größe auf. In den Gewebezuschnitten für die erste Gassacklage 4a und die zweite Gassacklage 4b sind die Fäden 16 jeweils gleich ausgerichtet. So erstrecken sich die Fäden 16 jeweils im Wesentlichen parallel beziehungsweise senkrecht zu der Umfangskante der im Wesentlichen rechteckigen Gewebezuschnitte.

Zur Herstellung des Gassacks 2 sind die erste Gassacklage 4a und die zweite Gassacklage 4b über eine erste Verbindung 6, die sich entlang der Umfangskante der Gassacklagen 4a, 4b erstreckt, verbunden. Ferner sind eine zweite Verbindung und eine dritte Verbindung vorgesehen, deren Verläufe in der Figur 2 mit den Bezugszeichen 8 und 10 gekennzeichnet sind. Die zweite Verbindung 8 und die dritte Verbindung 10 bilden jeweils eine geschlossene Kurve, die im Wesentlichen die Form eines Rechtecks aufweist. Die ersten, zweiten und dritten Verbindungen 6, 8, 10 sind dabei derart zueinander angeordnet, dass sie einen 8-förmigen Bereich begrenzen. Die von der zweiten Verbindung 8 und der dritten Verbindung 10 eingeschlossenen (im Wesentlichen rechteckigen) Bereiche der Gassacklagen 4a, 4b sind von dem übrigen im Wesentlichen 8-förmigen Bereich 12 der Gassacklagen 4a, 4b derart getrennt, dass vorrangig der 8-förmige Bereich 12 mit einem Gas befüllbar ist. Die Verbindungen 6, 8 und 10 können beispielsweise eine Naht, eine Schweißnaht oder eine Klebeverbindung sein.

Die erste Verbindung 6 erstreckt sich entlang der rechteckigen Umfangskante der Gewebezuschnitte. Die jeweils als rechteckig geschlossen verlaufenden zweiten und dritten Verbindungen 8 und 10 sind derart ausgerichtet, dass sie sich abschnittweise parallel zu der ersten Verbindung 6 erstrecken. Insgesamt erstrecken sich die Fäden 16 der ersten Gassacklage 4a und der zweiten Gassacklage 4b bei dem Gassack 2 aus Figur 1 parallel beziehungsweise senkrecht zu den ersten, zweiten und dritten Verbindungen 6, 8 und 10, die die erste Gassacklage 4a und die zweite Gassacklage 4b zusammenhalten. Durch die gleiche Ausrichtung der Fäden 16 in der ersten Gassacklage 4a und der zweiten Gassacklage 4b werden die Fäden 16 der ersten Gassacklage 4a und der zweiten Gassacklage 4b in dem aufgeblasenen Gassack 2 durch die Druckbeaufschlagung gleichermaßen beansprucht, so dass sich die erste Gassacklage 4a und die zweite Gassacklage 4b im Wesentlichen in gleichem Maße verformen.

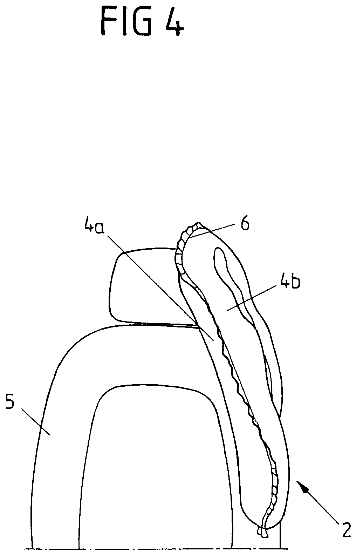

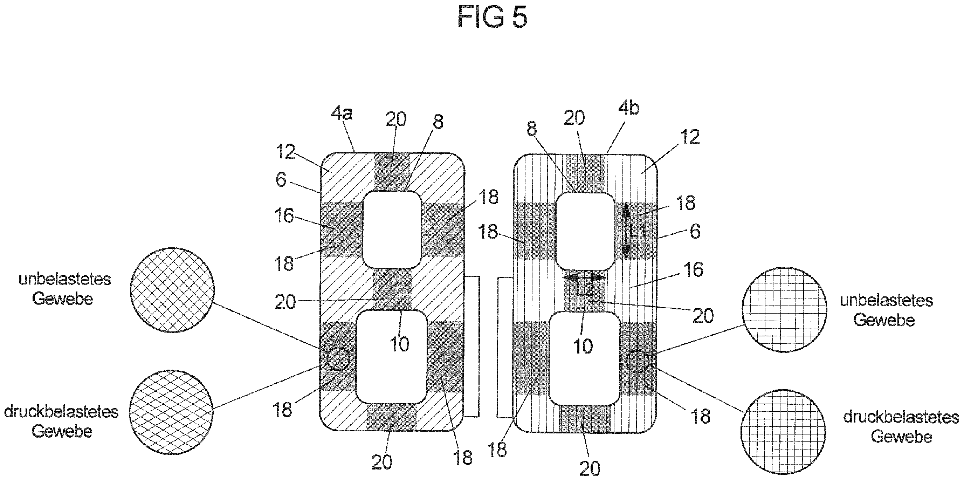

Ein erfindungsgemäßer Gassack 2 ist in Figur 4 in aufgeblasenem Zustand dargestellt. Dieser Gassack 2 umfasst die in Figur 5 dargestellte erste Gassacklage 4a und zweite Gassacklage 4b. Form, Größe und Material der Gassacklagen 4a, 4b aus Figur 5 entsprechen der Form, Größe und dem Material der Gassacklagen aus Figur 2. Die Gassacklagen aus Figur 5 werden durch erste, zweite und dritte Verbindungen 6, 8 und 10 zusammengehalten, die den ersten, zweiten und dritten Verbindungen 6, 8 und 10, die im Zusammenhang mit den Figuren 1 und 2 beschrieben wurden, entsprechen.

Die erste und die zweite Gassacklage 4a, 4b aus Figur 5 sind jeweils aus einem im Wesentlichen rechteckigen ersten beziehungsweise zweiten Gewebezuschnitt gebildet. Die beiden Gewebezuschnitte sind von der Form und der Größe her identisch. Ferner sind die beiden Gewebezuschnitte jeweils flächig anordenbar. Es handelt sich also um zweidimensionale Gewebezuschnitte. In der zweiten Gassacklage 4b sind die Fäden 16 parallel beziehungsweise senkrecht zu der im Wesentlichen rechteckigen Umfangskante des zweiten Gewebezuschnittes ausgerichtet. Demgegenüber verlaufen die Fäden 16 der ersten Gassacklage 4a nicht parallel beziehungsweise senkrecht zu der Umfangskante des ersten Gewebezuschnitts. Vielmehr schließen die Fäden 16 der ersten Gassacklage 4a einen Winkel von 45° mit der Umfangskante des ersten Gewebezuschnittes ein.

Die erste Gassacklage 4a kann aus dem gleichen Gewebe geschnitten sein wie die zweite Gassacklage 4b, wobei das Gewebe bezüglich einer zum Ausschneiden verwendeten Schablone für die Erzeugung des ersten und des zweiten Gewebezuschnittes unterschiedlich ausgerichtet wird. Wenn die erste Gassacklage 4a und die zweite Gassacklage 4b auf der dem Gassackinnenraum zugewandten Seite jeweils eine Beschichtung aufweisen, wird das Gewebe bezüglich einer zum Ausschneiden verwendeten Schablone für die Erzeugung des ersten und des zweiten Gewebezuschnittes spiegelbildlich ausgerichtet.

Im bestimmungsgemäß zueinander angeordneten Zustand der Gassacklagen 4a, 4b schließen die Fäden 16 der ersten Gassacklage 4a und die Fäden 16 der zweiten Gassacklage 4b einen Winkel von 45° ein. Nachdem die erste Gassacklage 4a und die zweite Gassacklage 4b mittels der Verbindungen 6, 8 und 10 miteinander verbunden worden sind, erstrecken sich die Fäden 16 der zweiten Gassacklage 4b parallel beziehungsweise senkrecht zu den Verbindungen 6, 8 und 10, und die Fäden 16 der ersten Gassacklage 4a in einem Winkel von 45° zu diesen Verbindungen 6, 8 und 10.

Durch die unterschiedliche Ausrichtung der Fäden 16 bezüglich der Verbindungen 6, 8 und 10 in der ersten Gassacklage 4a und der zweiten Gassacklage 4b weisen die erste Gassacklage 4a und die zweite Gassacklage 4b ein unterschiedliches Dehnungsverhalten auf, wenn der Gassack 2 mit einem Gas befüllt wird. Und zwar ist die erste Gassacklage 4a in einer Richtung quer zu einer Längsrichtung L1 von länglichen Abschnitten 18 des Gassacks 2 stärker dehnbar und wird in Längsrichtung L1 der länglichen Abschnitte 18 stärker gestaucht als die zweite Gassacklage 4b, wie im Folgenden erläutert wird.

Beim Aufblasen des Gassacks 2 wirken Zugkräfte auf die Gewebezuschnitte im Wesentlichen senkrecht zwischen zwei sich (parallel) gegenüberliegenden Abschnitten der Verbindungen 6, 8 und 10. So wirken die Zugkräfte im Wesentlichen entlang der Fäden 16 der zweiten Gassacklage 4b, so dass sich der Winkel zwischen den Kettfäden und den Schussfäden in der zweiten Gassacklage 4b beim Aufblasen des Gassacks 2 nur unwesentlich ändert (Figur 5). Das Ausmaß der Dehnung ist damit vorrangig von der Elastizität der Fäden 16 an sich abhängig. Insgesamt ist die Dehnung der zweiten Gassacklage 4b bei Druckbeaufschlagung eher klein. Demgegenüber wirken in der ersten Gassacklage 4a die Zugkräfte in einem Winkel von 45° zu den Fäden 16, so dass sich durch die Druckbeaufschlagung die Ausrichtung der Kettfäden und Schussfäden zueinander merklich ändert. So bilden die im Ruhezustand rechtwinklig zueinander angeordneten Schussfäden und Kettfäden in der ersten Gassacklage 4a bei Druckbeaufschlagung eine Rautenform (Figur 5). Das führt zu einer Dehnung des Gewebes der ersten Gassacklage 4a in eine erste Richtung und zur Stauchung des Gewebes in eine zweite Richtung, die orthogonal zu der ersten Richtung ist. Das Ausmaß der Dehnbarkeit der ersten Gassacklage 4a hängt vorrangig von der Richtungsänderung der Fäden 16 beim Aufblasen des Gassacks 2 ab, und die Elastizität der Fäden 16 an sich spielt nur eine untergeordnete Rolle.

Die Stauchung des Gewebes der ersten Gassacklage 4a ist für die Ausbildung einer Krümmung des aufgeblasenen Gassacks 2 von Bedeutung. Um die Krümmung in eine gewünschte Richtung zu lenken, ist die Geometrie des aufgeblasenen Gassacks 2 gezielt zu wählen. Der erfindungsgemäße Gassack 2 aus Figur 4 weist im aufgeblasenen Zustand eine Vielzahl von länglichen, insbesondere röhrenförmigen Abschnitten 18, 20 auf, die von den ersten, zweiten und dritten Verbindungen 6, 8 und 10 begrenzt werden. Die Abschnitte der Gassacklagen 4a, 4b, die im aufgeblasenen Zustand die röhrenförmigen Abschnitte 18, 20 bilden, sind in der Figur 5 grau hinterlegt dargestellt. Dabei gibt es vier erste (vertikale) röhrenförmige Abschnitte 18 und drei zweite (horizontale) röhrenförmige Abschnitte 20. Die Begriffe vertikal und horizontal beziehen sich dabei auf die Ausrichtung in Figur 5 und auf den bestimmungsgemäß an einem Fahrzeugsitz installierten Zustand, wie er in Figur 4 dargestellt ist. In Figur 4 ist die Rückenlehne 5 des Fahrzeugsitzes im Wesentlichen vertikal ausgerichtet.

Die vertikalen röhrenförmigen Abschnitte 18 erstrecken sich entlang ihrer Längsrichtung L1, wobei deren Länge entlang der Längsrichtung L1 größer als deren Breite quer zu der Längsrichtung L1 sein kann. Dementsprechend erstrecken sich die horizontalen röhrenförmigen Abschnitte 20 entlang ihrer Längsrichtung L2, wobei deren Länge entlang der Längsrichtung L2 größer als deren Breite quer zu der Längsrichtung L2 sein kann.

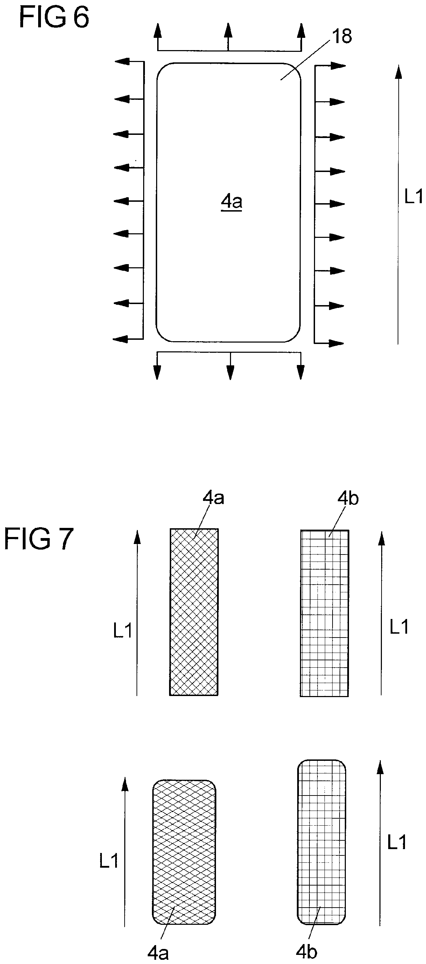

In Figur 6 ist beispielhaft ein vertikaler röhrenförmiger Abschnitt 18 mit Draufsicht auf die erste Gassacklage 4a dargestellt. Die Pfeile in Figur 6 deuten dabei die Zugkräfte an, die auf das Gewebe einwirken. Da der vertikale röhrenförmige Abschnitt 18 länger als breit ist, wirkt absolut betrachtet eine größere Kraft in Richtung der Breite (quer zu L1) als in Richtung der Länge (entlang L1). Somit richten sich bei Druckbeaufschlagung des Gewebes die Kettfäden und Schussfäden derart aus, dass sie ein Rautenmuster bilden, wobei das Gewebe in Richtung der Breite des vertikalen röhrenförmigen Abschnitts 18 (quer zur Längsrichtung L1) gedehnt wird und in Richtung der Länge des vertikalen röhrenförmigen Abschnitts 18 (entlang der Längsrichtung L1) gestaucht wird. Es folgt eine Verkürzung des röhrenförmigen Abschnitts 18.

Die Gassacklagen 4a, 4b des vertikalen röhrenförmigen Abschnitts 18 aus Figur 6 sind in Figur 7 getrennt dargestellt. Dabei sind im oberen Teil der Figur 7 die Gassacklagen 4a, 4b im nicht aufgeblasenen Zustand des Gassacks schematisch dargestellt und im unteren Teil der Figur 7 die Gassacklagen 4a, 4b im aufgeblasenen Zustand des Gassacks. Während sich die zweite Gassacklage 4b hinsichtlich seiner Ausdehnung entlang und quer zu L1 durch die Druckbeaufschlagung kaum ändert, dehnt sich die erste Gassacklage 4a quer zu der Längsrichtung L1 und verkürzt sich entsprechend entlang der Längsrichtung L1. Das unterschiedliche Verhalten der beiden Gassacklagen 4a, 4b des röhrenförmigen Abschnitts trägt zu einer Krümmung des aufgeblasenen Gassacks in Richtung der ersten Gassacklage 4a bei, wobei die Krümmung eine Abweichung von der Längsrichtung L1 des röhrenförmigen Abschnitts ist.

Dementsprechend verformt sich auch jeder horizontale röhrenförmige Abschnitt 20 bei Druckbeaufschlagung: das Gewebe (der ersten Gassacklage 4a) wird in Richtung der Breite des horizontalen röhrenförmigen Abschnitts 20 (quer zur Längsrichtung L2) gedehnt und in Richtung der Länge des horizontalen röhrenförmigen Abschnitts 20 (entlang der Längsrichtung L2) gestaucht, wenn der horizontale röhrenförmige Abschnitt 20 länger als breit ist.

Das Ausmaß der Dehnung und der Stauchung kann durch geeignete Wahl der Länge und der Breite eines röhrenförmigen Abschnitts 18, 20 beeinflusst werden. Ist der röhrenförmige Abschnitt 18, 20 im aufgeblasenen Zustand des Gassacks 2 zylinderförmig, so ist die Länge L des Zylinders vorzugsweise so zu wählen, dass sie der Ungleichung L≥π·r entspricht, wobei r der Radius bzw. der Abstand der Zylindermantelfäche von der zentralen Rotationsachse ist. Der aufgeblasene Zylinder hat einen Umfang U, der sich gemäß der Gleichung U=2·π·r berechnet. Um im aufgeblasenen Zustand einen Zylinder mit dem Umfang U bereit stellen zu können, kann die Breite der Abschnitte der zwei Gassacklagen 4a, 4b, die zur Ausbildung des Zylinders beitragen, so gewählt werden, dass sie jeweils der Hälfte des Umfangs U entsprechen. Nimmt man an, dass die Breite b jeder Gassacklage der Gleichung b=U/2 genügt, so kann die Ungleichung L≥π·r, die für den aufgeblasenen Zustand gilt, übertragen auf den nicht aufgeblasenen Zustand L≥b ausgedrückt werden.

Der Stauchungs-/Dehnungs-Effekt summiert sich für die vier vertikalen röhrenförmigen Abschnitte 18 und summiert sich für die drei horizontalen röhrenförmigen Abschnitte 20 in der ersten Gassacklage 4a auf, während dieser Effekt in der zweiten Gassacklage 4b nicht eintritt. Dabei überlagert sich der Effekt der vertikalen röhrenförmigen Abschnitte 18 mit dem Effekt der horizontalen röhrenförmigen Abschnitte 20. Die Verkürzung oder Stauchung der röhrenförmigen Abschnitte 18, 20 auf Seite der ersten Gassacklage 4a führt in Kombination mit der zweiten Gassacklage 4b zu einer Krümmung des aufgeblasenen Gassacks 2 in Richtung der ersten Gassacklage 4a. Dabei tragen die vertikalen röhrenförmigen Abschnitte 18 vorrangig zu einer Abweichung von einer Achse, die parallel zu der Längsrichtung L1 ist, bei und die horizontalen röhrenförmigen Abschnitte 20 zu einer Abweichung von einer Achse, die parallel zu der Längsrichtung L2 ist. Der Effekt der vertikalen röhrenförmigen Abschnitte 18 und der Effekt der horizontalen röhrenförmigen Abschnitte 20 überlagern sich derart, dass insgesamt eine schalenartige Krümmung erzeugt wird. Wenn sich der Gassack 2 im aufgeblasenen Zustand seitlich neben dem Fahrzeuginsassen entfaltet, wobei die erste Gassacklage 4a dem Fahrzeuginsassen zugewandt ist und die zweite Gassacklage 4b von dem Fahrzeuginsassen abgewandt ist, kann der Gassack 2 somit insgesamt einen seitlichen Aufprallschutz und insbesondere auch einen Aufprallschutz in bzw. entgegen der Fahrtrichtung (entlang der Längsrichtung L2) bieten.

Durch Wahl der Anzahl, Ausrichtung und Form der röhrenförmigen Abschnitte 18, 20 kann die Geometrie des aufgeblasenen Gassacks gezielt beeinflusst werden. So ist die Anzahl der vertikalen röhrenförmigen Abschnitte 18 und der horizontalen röhrenförmigen Abschnitte 20 variabel. Ferner ist denkbar, dass der Gassack 2 nur einen röhrenförmigen Abschnitt aufweist. Ist die Länge (entlang der Längsrichtung) größer als die Breite (quer zur Längsrichtung) wird sich die erste Gassacklage 4a entlang der Längsrichtung des röhrenförmigen Abschnitts verkürzen, während die zweite Gassacklage nahezu unverändert bleibt. Im Ergebnis stellt sich eine Krümmung des aufgeblasenen Gassacks 2 in Richtung der ersten Gassacklage 4a ein, wobei die Krümmung eine Abweichung von der Längsrichtung des röhrenförmigen Abschnitts ist. Alternativ können mehrere röhrenförmige Abschnitte, die ausschließlich (im Wesentlichen) parallel zueinander beziehungsweise auf einer gemeinsamen Achse liegen, vorgesehen sein. Ferner können mehrere röhrenförmige Abschnitte vorgesehen sein, die orthogonal zueinander ausgerichtet sind, wobei sich die röhrenförmigen Abschnitte nicht zwingend vertikal und horizontal erstrecken. Die Begriffe "vertikal" und "horizontal" beziehen sich hier ebenfalls auf die in Figur 5 dargestellte Ausrichtung und den bestimmungsgemäß an einem Fahrzeugsitz installierten Zustand, wie er in Figur 4 dargestellt ist, wobei sich "vertikal" auf die Längsrichtung L1 bezieht und "horizontal" auf eine Richtung L2 quer dazu.

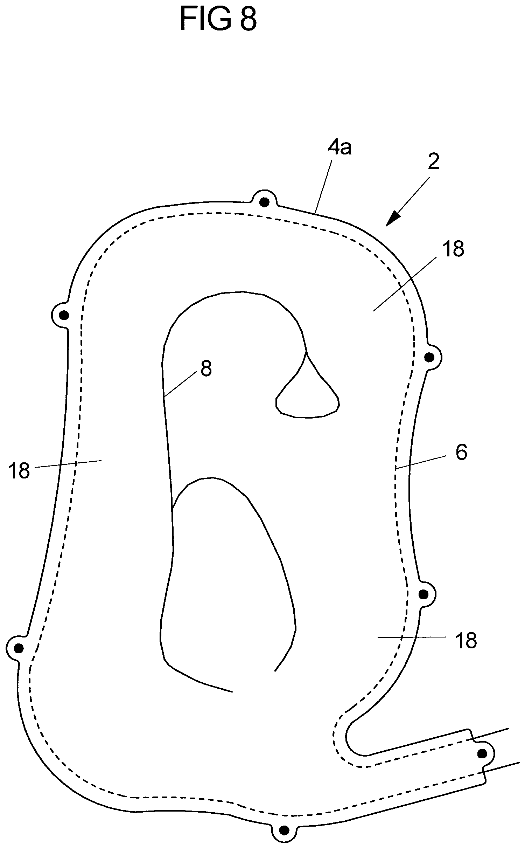

Auch müssen die röhrenförmigen Abschnitte nicht zwingend symmetrisch (wie beispielsweise in Figur 5) verteilt sein. Vielmehr können die röhrenförmigen Abschnitte je nach gewünschter Form des aufgeblasenen Gassacks beliebig verteilt sein, wobei sie sich zudem in Größe und/oder Form (z.B. geradlinig oder leicht gekrümmt) unterscheiden können. Ein Beispiel für einen solchen Gassack ist in Figur 8 dargestellt. Gemäß Fig. 8 erstreckt sich ein durchgehender röhrenförmiger Abschnitt 18 auf der einen (in Fig. 8 linken) Seite und zwei voneinander beabstandete röhrenförmige Abschnitte 18 auf der anderen (rechten) Seite des Gassacks 2. Die Gesamtlänge der rechten röhrenförmigen Abschnitte 18 ist kleiner als die Länge des linken röhrenförmigen Abschnitts 18, so dass sich die linke Seite des Gassacks 2 stärker krümmen wird als die rechte Seite.

In dem in den Figuren dargestellten Ausführungsbeispiel haben die länglichen beziehungsweise röhrenförmigen Abschnitte 18, 20 einen runden Querschnitt. Allerdings sind andere Formen denkbar, die von einer Kreisform abweichen. So kann ein röhrenförmiger Abschnitt im Querschnitt beispielsweise auch oval sein.

In dem erfindungsgemäßen Gassack (Figuren 4 bis 8) schließen die Fäden 16 der ersten Gassacklage 4a und die Fäden der zweiten Gassacklage 4b einen Winkel von 45° ein, wobei die Fäden 16 der zweiten Gassacklage 4b sich senkrecht zwischen den Verbindungen 6, 8 und 10, also in Richtung der Zugkräfte, erstrecken. Bei dieser Konfiguration ist der Unterschied im Dehnungsverhalten (quer zu der Längsrichtung der länglichen/röhrenförmigen Abschnitte 18, 20) beziehungsweise Stauchungsverhalten (entlang der Längsrichtung der länglichen/röhrenförmigen Abschnitte 18, 20) der beiden Gassacklagen 4a, 4b am größten. Um das Ausmaß der Krümmung zu verringern, kann daher der Winkel variiert werden und einen Wert zwischen 0° und 45° annehmen. Um eine Krümmung des aufgeblasenen Gassacks zu erzielen, ist neben dem Winkel, den die Fäden 16 der ersten Gassacklage 4a und die Fäden 16 der zweiten Gassacklage 4b miteinander einschließen, zusätzlich der Winkel, den die Fäden 16 der ersten Gassacklage 4a beziehungsweise der zweiten Gassacklage 4b mit den Verbindungen 6, 8 und 10 einschließen, zu beachten. So ist das Dehnungsverhalten der ersten Gassacklage 4a und der zweiten Gassacklage 4b beispielsweise identisch, wenn die Fäden 16 der ersten Gassacklage 4a und die Fäden der zweiten Gassacklage 4b einen Winkel > 0° miteinander einschließen, die Fäden 16 der ersten Gassacklage 4a mit den Verbindungen 6, 8, 10 aber den gleichen Winkel wie die Fäden 16 der zweiten Gassacklage 4b mit den Verbindungen 6, 8, 10 einschließen. Um ein unterschiedliches Dehnungsverhalten herbeizuführen ist daher darauf zu achten, dass der Winkel, den die Fäden 16 der ersten Gassacklage 4a mit den Verbindungen 6, 8, 10 einschließen, sich von dem Winkel, den die Fäden 16 der zweiten Gassacklage 4b mit den Verbindungen 6, 8, 10 einschließen, unterscheiden.

Um ein frühzeitiges Auffangen eines Fahrzeuginsassen im Fall eines seitlichen Aufpralls zu erreichen, kann ein den erfindungsgemäßen Gassack 2 umfassendes Airbagmodul derart (beispielsweise an der Rückenlehne des Fahrzeugsitzes) angeordnet sein, dass die erste Gassacklage 4a des aufgeblasenen Gassacks 2 im Auslösefall dem Fahrzeuginsassen zugewandt ist und die zweite Gassacklage 4b von dem Fahrzeuginsassen abgewandt ist (Figur 4). Somit krümmt sich der aufgeblasene Gassack 2 im Auslösefall zu dem Fahrzeuginsassen hin.

In den Figuren wurde der erfindungsgemäße Gassack 2 im Zusammenhang mit einem Airbagmodul zum Schutz gegen einen Far-Side Aufprall, das in der Rückenlehne 5 des Fahrzeugsitzes integriert ist, dargestellt. Es ist jedoch auch denkbar, dass der erfindungsgemäße Gassack 2 in einem Airbagmodul zum Schutz gegen einen Near-Side Aufprall mit einem vorhangartigen Gassack, das beispielsweise im oberen Bereich der Fahrzeugkarosserie angeordnet ist, zur Anwendung kommt.

## Patentansprüche

1. Gassack (2), der zum Schutz eines Fahrzeuginsassen aufblasbar ist, umfassend:
eine erste Gassacklage (4a) und eine zweite Gassacklage (4b),
wobei ein erster Gewebezuschnitt die erste Gassacklage (4a) bildet und ein zweiter Gewebezuschnitt die zweite Gassacklage (4b) bildet,
wobei der erste Gewebezuschnitt und der zweite Gewebezuschnitt jeweils aus Fäden (16) gewebt sind,
wobei der Gassack (2) mindestens einen länglichen Abschnitt (18) aufweist, der sich entlang einer Längsrichtung (L1) erstreckt und der zumindest von einem Teil der ersten Gassacklage (4a) und zumindest einem Teil der zweiten Gassacklage (4b) gebildet ist,
**dadurch gekennzeichnet,**
**dass** im Ruhezustand des Gassacks die Fäden (16) der ersten Gassacklage (4a) und die Fäden (16) der zweiten Gassacklage (4b) derart zueinander ausgerichtet sind, dass die Fäden (16) der ersten Gassacklage (4a) mit der Längsrichtung (L1) des länglichen Abschnitts (18) einen anderen Winkel einschließen als die Fäden (16) der zweiten Gassacklage (4b),
wobei die Winkel derart gewählt sind, dass der Gassack (2) im aufgeblasenen Zustand eine Krümmung in Richtung einer der beiden Gassacklagen (4a, 4b) aufweist.

2. Gassack (2) nach Anspruch 1, **dadurch gekennzeichnet, dass** die erste und die zweite Gassacklage (4a, 4b) jeweils entlang ihrer Umfangskante mittels einer ersten Verbindung (6) miteinander verbunden sind, wobei die Fäden (16) der ersten Gassacklage (4a) einen anderen Winkel mit der ersten Verbindung (6) einschließen als die Fäden (16) der zweiten Gassacklage (4b).

3. Gassack (2) nach Anspruch 1 oder 2, **dadurch gekennzeichnet, dass** die Fäden der ersten und der zweiten Gassacklage (4a, 4b) so relativ zu der Längsrichtung (L1) des länglichen Abschnitts (18) orientiert sind, dass sich die erste Gassacklage (4a) beim Aufblasen des Gassacks (2) im Vergleich mit der zweiten Gassacklage (4b) entlang der Längsrichtung (L1) des länglichen Abschnitts (18) verkürzt und senkrecht zu der Längsrichtung (L1) des länglichen Abschnitts (18) dehnt.

4. Gassack (2) nach einem der vorhergehenden Ansprüche, **dadurch gekennzeichnet, dass** sich die Fäden (16) der zweiten Gassacklage (4b) im Wesentlichen senkrecht beziehungsweise parallel zu der Längsachse (L1) des länglichen Abschnitts (18) erstrecken.

5. Gassack (2) nach einem der vorhergehenden Ansprüche, **dadurch gekennzeichnet, dass** die Krümmung eine Abweichung von der Längsrichtung (L1) in Richtung der ersten Gassacklage (4a) umfasst.

6. Gassack (2) nach einem der vorhergehenden Ansprüche, **dadurch gekennzeichnet, dass** der Gassack (2) im aufgeblasenen Zustand mehrere längliche Abschnitte (18) aufweist, die zumindest näherungsweise parallel zueinander angeordnet sind beziehungsweise auf einer gemeinsamen Achse liegen, wobei sich insbesondere zwischen zumindest zwei der länglichen Abschnitte (18) ein Trennbereich befindet, der im aufgeblasenen Zustand eine geringere Dicke aufweist als die länglichen Abschnitte (18), wobei der Trennbereich insbesondere als nicht aufblasbarer Bereich gestaltet ist.

7. Gassack (2) nach einem der vorherigen Ansprüche, **dadurch gekennzeichnet, dass** der Gassack (2) im aufgeblasenen Zustand mindestens einen ersten und mindestens einen zweiten länglichen Abschnitt (20) aufweist, wobei sich der zweite längliche Abschnitt (20) entlang seiner Längsrichtung (L2) und im Wesentlichen senkrecht zu der Längsrichtung (L1) des mindestens einen ersten länglichen Abschnitts (18) erstreckt und der zumindest von einem Teil der ersten Gassacklage (4a) und zumindest einem Teil der zweiten Gassacklage (4b) gebildet ist, wobei insbesondere der erste und der zweite längliche Abschnitt (18, 20) so beschaffen sind, dass der aufgeblasene Gassack (2) aufgrund des ersten länglichen Abschnitts (18) eine Krümmung um eine erste Achse und aufgrund des zweiten länglichen Abschnitts (20) eine Krümmung um eine zweite Achse aufweist.

8. Gassack (2) nach einem der vorherigen Ansprüche, **dadurch gekennzeichnet, dass** der erste Gewebezuschnitt und der zweite Gewebezuschnitt das gleiche Gewebe umfassen und insbesondere aus dem gleichen Gewebe gefertigt sind.

9. Gassack (2) nach einem der Ansprüche 1 bis 7, **dadurch gekennzeichnet, dass** der erste Gewebezuschnitt und der zweite Gewebezuschnitt jeweils aus senkrecht zueinander verlaufenden Kettfäden (16) und Schussfäden (16) gewebt sind, wobei das Gewebe des ersten Gewebezuschnitts und das Gewebe des zweiten Gewebezuschnitts derart unterschiedlich ausgebildet sind, dass sich beim Aufblasen des Gassacks (2) die relative Ausrichtung der Kettfäden (16) und Schussfäden (16) des ersten Gewebezuschnitts stärker ändert als die relative Ausrichtung der Kettfäden (16) und Schussfäden (16) des zweiten Gewebezuschnitts.

10. Gassack (2) nach einem der vorhergehenden Ansprüche, **dadurch gekennzeichnet, dass** zumindest das Gewebe des ersten Gewebezuschnitts eine Beschichtung aufweist, wobei insbesondere das Gewebe des ersten Gewebezuschnitts und das Gewebe des zweiten Gewebezuschnitts jeweils senkrecht zueinander verlaufenden Kettfäden (16) und Schussfäden (16) und eine Beschichtung aufweisen, wobei die Beschichtung des ersten Gewebezuschnitts eine Änderung der relativen Ausrichtung der Kettfäden (16) und Schussfäden (16) des ersten Gewebezuschnitts weniger behindert als die Beschichtung des zweiten Gewebezuschnitts eine Änderung der relativen Ausrichtung der Kettfäden (16) und Schussfäden (16) des zweiten Gewebezuschnitts.

11. Gassack (2) nach einem der vorherigen Ansprüche, **dadurch gekennzeichnet, dass** der erste Gewebezuschnitt und der zweite Gewebezuschnitt jeweils aus senkrecht zueinander verlaufenden Kettfäden (16) und Schussfäden (16) gewebt sind, die bei Beanspruchung der Gewebezuschnitte in Richtung der Kettfäden (16) beziehungsweise der Schussfäden (16) dasselbe Dehnungsverhalten aufweisen.

12. Gassack (2) nach einem der vorherigen Ansprüche, **dadurch gekennzeichnet, dass** mindestens ein Abspannband vorgesehen ist, das eine Ausbildung der Krümmung des Gassacks (2) im aufgeblasenen Zustand verstärkt.

13. Airbagmodul umfassend einen Gassack, der zum Schutz eines Fahrzeuginsassen aufblasbar ist, und einen Gasgenerator zum Einleiten eines Gases in den Gassack, **dadurch gekennzeichnet, dass** der Gassack ein Gassack (2) nach einem der vorherigen Ansprüche ist.

14. Airbagmodul nach Anspruch 13, **dadurch gekennzeichnet, dass** das Airbagmodul derart an einer Rückenlehne (5) eines Fahrzeugsitzes anordenbar ist, dass sich der Gassack (2) im aufgeblasenen Zustand seitlich neben dem Fahrzeuginsassen entfalten kann, wobei im bestimmungsgemäß angeordneten Zustand des Airbagmoduls und im aufgeblasenen Zustand des Gassacks (2) der mindestens eine erste längliche Abschnitt (18) insbesondere im Wesentlichen vertikal beziehungsweise parallel zu einer B-Säule eines Fahrzeugs ausgerichtet ist.

15. Airbagmodul nach einem der Ansprüche 13 oder 14, **dadurch gekennzeichnet, dass** im aufgeblasenen Zustand die erste Gassacklage (4a) dem Fahrzeuginsassen zugewandt ist und die zweite Gassacklage (4b) von dem Fahrzeuginsassen abgewandt ist.

## Claims

1. A gas bag (2) which is inflatable for the protection of a vehicle occupant, comprising:
a first gas bag layer (4a) and a second gas bag layer (4b),
wherein a first fabric blank forms the first gas bag layer (4a) and a second fabric blank forms the second gas bag layer (4b),
wherein the first fabric blank and the second fabric blank each are woven from threads (16),
wherein the gas bag (2) includes at least one elongate portion (18) which extends along a longitudinal direction (L1) and which is formed at least by a part of the first gas bag layer (4a) and at least a part of the second gas bag layer (4b),
**characterized in**
**that** in the rest condition of the gas bag the threads (16) of the first gas bag layer (4a) and the threads (16) of the second gas bag layer (4b) are oriented relative to each other such that the threads (16) of the first gas bag layer (4a) include a different angle with the longitudinal direction (L1) of the elongate portion (18) than the threads (16) of the second gas bag layer (4b),
wherein the angles are chosen such that in the inflated condition the gas bag (2) has a curvature in direction of one of the two gas bag layers (4a, 4b).

2. The gas bag (2) according to claim 1, **characterized in that** the first and the second gas bag layer (4a, 4b) each are connected with each other along their circumferential edge by means of a first connection (6), wherein the threads (16) of the first gas bag layer (4a) include a different angle with the first connection (6) than the threads (16) of the second gas bag layer (4b).

3. The gas bag (2) according to claim 1 or 2, **characterized in that** the threads of the first and the second gas bag layer (4a, 4b) are oriented relative to the longitudinal direction (L1) of the elongate portion (18) such that on inflation of the gas bag (2) the first gas bag layer (4a) contracts along the longitudinal direction (L1) of the elongate portion (18) and stretches vertically to the longitudinal direction (L1) of the elongate portion (18) as compared to the second gas bag layer (4b).

4. The gas bag (2) according to any of the preceding claims, **characterized in that** the threads (16) of the second gas bag layer (4b) extend substantially vertically or parallel to the longitudinal axis (L1) of the elongate portion (18).

5. The gas bag (2) according to any of the preceding claims, **characterized in that** the curvature comprises a deviation from the longitudinal direction (L1) in direction of the first gas bag layer (4a).

6. The gas bag (2) according to any of the preceding claims, **characterized in that** in the inflated condition the gas bag (2) includes several elongate portions (18) which at least approximately are arranged parallel to each other or lie on a common axis, wherein in particular between at least two of the elongate portions (18) a separating region is disposed, which in the inflated condition has a smaller thickness than the elongate portions (18), wherein in particular the separating region is designed as non-inflatable region.

7. The gas bag (2) according to any of the preceding claims, **characterized in that** in the inflated condition the gas bag (2) includes at least one first and at least one second elongate portion (20), wherein the second elongate portion (20) extends along its longitudinal direction (L2) and substantially vertically to the longitudinal direction (L1) of the at least one first elongate portion (18) and which is formed by at least a part of the first gas bag layer (4a) and at least a part of the second gas bag layer (4b), wherein in particular the first and the second elongate portion (18, 20) are designed such that the inflated gas bag (2) has a curvature about a first axis due to the first elongate portion (18) and a curvature about a second axis due to the second elongate portion (20).

8. The gas bag (2) according to any of the preceding claims, **characterized in that** the first fabric blank and the second fabric blank comprise the same fabric and in particular are fabricated from the same fabric.

9. The gas bag (2) according to any of claims 1 to 7, **characterized in that** the first fabric blank and the second fabric blank each are woven from warp threads (16) and weft threads (16) extending vertically to each other, wherein the fabric of the first fabric blank and the fabric of the second fabric blank are formed differently such that on inflation of the gas bag (2) the relative orientation of the warp threads (16) and weft threads (16) of the first fabric blank changes more strongly than the relative orientation of the warp threads (16) and weft threads (16) of the second fabric blank.

10. The gas bag (2) according to any of the preceding claims, **characterized in that** at least the fabric of the first fabric blank has a coating, wherein in particular the fabric of the first fabric blank and the fabric of the second fabric blank each include warp threads (16) and weft threads (16) extending vertically to each other and a coating, wherein the coating of the first fabric blank impedes a change of the relative orientation of the warp threads (16) and weft threads (16) of the first fabric blank less than the coating of the second fabric blank impedes a change of the relative orientation of the warp threads (16) and weft threads (16) of the second fabric blank.

11. The gas bag (2) according to any of the preceding claims, **characterized in that** the first fabric blank and the second fabric blank each are woven from warp threads (16) and weft threads (16) extending vertically to each other, which on stressing of the fabric blanks in direction of the warp threads (16) or weft threads (16) have the same stretching behavior.

12. The gas bag (2) according to any of the preceding claims, **characterized in that** at least one bracing band is provided, which intensifies a formation of the curvature of the gas bag (2) in the inflated condition.

13. An airbag module comprises a gas bag, which is inflatable for the protection of a vehicle occupant, and a gas generator for introducing a gas into the gas bag, **characterized in that** the gas bag is a gas bag (2) according to any of the preceding claims.

14. The airbag module according to claim 13, **characterized in that** the airbag module can be arranged on a backrest (5) of a vehicle seat such that in the inflated condition the gas bag (2) can be deployed laterally beside the vehicle occupant, wherein in the properly arranged condition of the airbag module and in the inflated condition of the gas bag (2) the at least one first elongate portion (18) in particular is oriented substantially vertically or parallel to a B-pillar of a vehicle.

15. The airbag module according to any of claims 13 or 14, **characterized in that** in the inflated condition the first gas bag layer (4a) faces the vehicle occupant and the second gas bag layer (4b) faces away from the vehicle occupant.

## Revendications

1. Coussin gonflable (2), qui peut être gonflé pour la protection d'un occupant du véhicule, comprenant:
une première couche de coussin gonflable (4a) et une seconde couche de coussin gonflable (4b),
dans lequel une première pièce de tissu forme la première couche de coussin gonflable (4a) et une seconde pièce de tissu forme la seconde couche de coussin gonflable (4b),
dans lequel la première pièce de tissu et la seconde pièce de tissu sont tissées chacune à partir de fils (16),
dans lequel le coussin gonflable (2) présente au moins une partie allongée (18), qui s'étend le long d'une direction longitudinale (L1) et qui est formée par au moins une partie de la première couche de coussin gonflable (4a) et au moins une partie de la seconde couche de coussin gonflable (4b),
**caractérisé en ce que**
dans l'état de repos du coussin gonflable les fils (16) de la première couche de coussin gonflable (4a) et les fils (16) de la seconde couche de coussin gonflable (4b) sont orientés les uns par rapport aux autres de telle manière que les fils (16) de la première couche de coussin gonflable (4a) forment avec la direction longitudinale (L1) de la partie allongée (18) un autre angle que les fils (16) de la seconde couche de coussin gonflable (4b), dans lequel les angles sont choisis de telle manière que le coussin gonflable (2) présente dans l'état gonflé une courbure en direction d'une des deux couches de coussin gonflable (4a, 4b).

2. Coussin gonflable (2) selon la revendication 1, **caractérisé en ce que** la première et la seconde couches de coussin gonflable (4a, 4b) sont assemblées l'une à l'autre respectivement le long de leur bord périphérique au moyen d'un premier assemblage (6), dans lequel les fils (16) de la première couche de coussin gonflable (4a) forment avec le premier assemblage (6) un autre angle que les fils (16) de la seconde couche de coussin gonflable (4b).

3. Coussin gonflable (2) selon une revendication 1 ou 2, **caractérisé en ce que** les fils de la première et de la seconde couches de coussin gonflable (4a, 4b) sont orientés par rapport à la direction longitudinale (L1) de la partie allongée (18) de telle manière que la première couche de coussin gonflable (4a) se raccourcisse lors du gonflage du coussin gonflable (2) par rapport à la seconde couche de coussin gonflable (4b) le long de la direction longitudinale (L1) de la partie allongée (18) et s'allonge perpendiculairement à la direction longitudinale (L1) de la partie allongée (18).

4. Coussin gonflable (2) selon l'une quelconque des revendications précédentes, **caractérisé en ce que** les fils (16) de la seconde couche de coussin gonflable (4b) s'étendent essentiellement perpendiculairement ou parallèlement à l'axe longitudinal (L1) de la partie allongée (18).

5. Coussin gonflable (2) selon l'une quelconque des revendications précédentes, **caractérisé en ce que** la courbure comprend une déviation de la direction longitudinale (L1) en direction de la première couche de coussin gonflable (4a).

6. Coussin gonflable (2) selon l'une quelconque des revendications précédentes, **caractérisé en ce que** le coussin gonflable (2) présente dans l'état gonflé plusieurs parties allongées (18), qui sont disposées au moins approximativement parallèlement l'une à l'autre ou sont situées sur un axe commun, dans lequel il se trouve en particulier entre au moins deux des parties allongées (18) une zone de séparation, qui présente dans l'état gonflé une plus faible épaisseur que les parties allongées (18), dans lequel la zone de séparation est configurée en particulier comme une zone non gonflable.

7. Coussin gonflable (2) selon l'une quelconque des revendications précédentes, **caractérisé en ce que** le coussin gonflable (2) présente dans l'état gonflé au moins une première et au moins une seconde parties allongées (20), dans lequel la seconde partie allongée (20) s'étend le long de sa direction longitudinale (L2) et essentiellement perpendiculairement à la direction longitudinale (L1) de ladite au moins une première partie allongée (18), et qui est formée au moins par une partie de la première couche de coussin gonflable (4a) et au moins une partie de la seconde couche de coussin gonflable (4b), dans lequel en particulier la première et la seconde parties allongées (18, 20) sont réalisées de telle manière que le coussin gonflable gonflé (2) présente à cause de la première partie allongée (18) une courbure autour d'un premier axe et à cause de la seconde partie allongée (20) une courbure autour d'un second axe.

8. Coussin gonflable (2) selon l'une quelconque des revendications précédentes, **caractérisé en ce que** la première pièce de tissu et la seconde pièce de tissu comprennent le même tissu et sont en particulier fabriquées avec le même tissu.

9. Coussin gonflable (2) selon l'une quelconque des revendications 1 à 7, **caractérisé en ce que** la première pièce de tissu et la seconde pièce de tissu sont tissées respectivement en fils de chaîne (16) et en fils de trame (16) s'étendant perpendiculairement les uns aux autres, dans lequel le tissu de la première pièce de tissu et le tissu de la seconde pièce de tissu sont formés de façon différente, de telle manière que lors du gonflage du coussin gonflable (2) l'orientation relative des fils de chaîne (16) et des fils de trame (16) de la première pièce de tissu change plus fortement que l'orientation relative des fils de chaîne (16) et des fils de trame (16) de la seconde pièce de tissu.

10. Coussin gonflable (2) selon l'une quelconque des revendications précédentes, **caractérisé en ce qu'**au moins le tissu de la première pièce de tissu présente un revêtement, dans lequel en particulier le tissu de la première pièce de tissu et le tissu de la seconde pièce de tissu présentent respectivement des fils de chaîne (16) et des fils de trame (16) s'étendant perpendiculairement les uns aux autres et un revêtement, dans lequel le revêtement de la première pièce de tissu empêche moins un changement de l'orientation relative des fils de chaîne (16) et des fils de trame (16) de la première pièce de tissu que le revêtement de la seconde pièce de tissu n'empêche un changement de l'orientation relative des fils de chaîne (16) et des fils de trame (16) de la seconde pièce de tissu.

11. Coussin gonflable (2) selon l'une quelconque des revendications précédentes, **caractérisé en ce que** la première pièce de tissu et la seconde pièce de tissu sont tissées respectivement en fils de chaîne (16) et en fils de trame (16) s'étendant perpendiculairement les uns aux autres, qui présentent le même comportement d'allongement lors d'une sollicitation des pièces de tissu dans la direction des fils de chaîne (16) ou dans la direction des fils de trame (16).

12. Coussin gonflable (2) selon l'une quelconque des revendications précédentes, **caractérisé en ce qu'**il est prévu au moins une bande d'entoilage, qui renforce une formation de la courbure du coussin gonflable (2) dans l'état gonflé.

13. Module de coussin gonflable comprenant un coussin gonflable, qui peut être gonflé pour la protection d'un occupant du véhicule, et un générateur de gaz pour introduire un gaz dans le coussin gonflable, **caractérisé en ce que** le coussin gonflable est un coussin gonflable (2) selon l'une quelconque des revendications précédentes.

14. Module de coussin gonflable selon la revendication 13, **caractérisé en ce que** le module de coussin gonflable peut être disposé à un dossier (5) d'un siège de véhicule, de telle manière que le coussin gonflable (2) puisse dans l'état gonflé se déployer latéralement à côté de l'occupant du véhicule, dans lequel, dans l'état correctement installé du module de coussin gonflable et dans l'état gonflé du coussin gonflable (2), ladite au moins une partie allongée (18) est orientée en particulier essentiellement verticalement ou parallèlement à un montant B d'un véhicule.

15. Module de coussin gonflable selon une des revendications 13 ou 14, **caractérisé en ce que** dans l'état gonflé la première couche de coussin gonflable (4a) est tournée vers l'occupant du véhicule et la seconde couche de coussin gonflable (4b) est détournée de l'occupant du véhicule.
